# EUROPEAN PATENT APPLICATION

(11) **EP 4 815 081 A1**
(43) Date of publication of application: **30.09.2026**
(21) Application number: 26152861.6
(22) Date of filing: 20.01.2026
(51) Int. Cl.: H01M 10/04, B08B 7/00, B23K 26/352, H01M 10/42, H01M 50/54, H01M 10/12

(54) **METHOD OF CLEANING A BATTERY PLATE LUG**

(30) Priority: 28.03.2025 GB 202504644
(71) Applicant: SPTS Technologies Limited, NP18 2TA (GB)
(72) Inventor: COOP, Michael, Gloucester, GL3 4AQ (GB); WOOD-STRATTON, Rhys, Gloucester, GL3 4AQ (GB)
(74) Representative: Wynne-Jones IP Limited

(57) **Abstract**

According to the invention there is provided a method of cleaning a lug of a battery plate, the method comprising: providing a battery plate comprising a lug having a first side and a second side; and using one or more laser sources to apply laser light to the lug in order to clean the first and second sides of the lug; wherein the step of applying laser light to the lug occurs between the steps of enveloping the battery plate and stacking the battery plate of a battery plate assembly process.

## Description

### Field of the Disclosure

This invention relates to a method of cleaning a lug of a battery plate, and to related apparatus.

### Background of the Disclosure

The term "battery" is used herein to include accumulators.

In the manufacture of batteries, particularly for example lead acid batteries, battery plates are manufactured by known methods. A paste can then be applied to the battery plates, where the paste is then dried or cured.

In the production of batteries, alternating positive and negative battery plates can be connected to each other by means of a lead strap or post which is fixed to lugs projecting from edges of the plates. To achieve this connection, the lugs are dipped into a mould containing molten lead, which solidifies and provides an electrical connection between the battery plates.

Battery plate lugs require cleaning to ensure a good bond is achieved when they are dipped in molten lead. Typically, battery plate lugs are cleaned using wire brushes, to remove any residual paste remaining after the pasting process and/or to remove native layers of oxidised lead.

The brushing process is aggressive, messy, causes significant air contamination from lead debris and adds complexity to plate feed processes due to the large footprint requirement of a motor and a brush, and the orientation requirement of the plate such that the lug is exposed to the brush. The brushing process can cause damage to battery plate lugs, for example by scoring the lugs or by ripping the lugs off the battery plates, particularly if the lugs are not set properly or if the lugs are fragile. In addition, battery plates can easily lose alignment during the cleaning process, requiring the battery plates to be realigned.

### Statement of Invention

The present invention, in at least some of its embodiments, addresses the above described problems and desires. In particular, the present invention provides a method and associated apparatus which enable cleaning of battery plate lugs.

According to a first aspect of the invention there is provided a method of cleaning a lug of a battery plate, the method comprising: providing a battery plate comprising a lug having a first side and a second side; and using one or more laser sources to apply laser light to the lug in order to clean the first and second sides of the lug; wherein the step of applying laser light to the lug occurs between the steps of enveloping the battery plate and stacking the battery plate of a battery plate assembly process.

In this way, the battery plate lug can be cleaned effectively and efficiently using a cleaning mechanism having a small footprint, without impacting the alignment of the battery plate and while simplifying the orientation requirement of the battery plate, such that a good bond can be achieved when the battery plate lugs are dipped in molten lead. In other words, the one or more laser sources can take up less space than a motor and a brush, and the battery plates can be orientated over a greater range of angles while effective cleaning of the battery plate lug can still be achieved, thereby further simplifying the process of cleaning battery plate lugs. In addition, battery plate lugs can be cleaned in a less mechanically aggressive manner thereby mitigating potential damage to soft or thin battery plate lugs.

The laser light can be applied to the lug such that the laser light is substantially perpendicular to the lug. In other words, the angle of incidence can be about 0°. For example, laser light can be applied to the lug such that the laser light is perpendicular to the first side of the lug and/or the second side of the lug. In this way, high intensity laser light can be applied to the lug, which can result in more efficient cleaning of the lug.

The laser light can be applied to the lug such that the laser light is non-perpendicular to the lug. In other words, the angle of incidence can be between 0° and 90° (excluding the endpoints). The angle of incidence can be between 0° and 45°, preferably between 0° and 30°, more preferably between 0° and 10° (excluding the endpoints). The angle of incidence can be between 5° and 45°, preferably between 5° and 30°, more preferably between 5° and 10° (excluding the endpoints). In this way, laser light can be spread over a greater area, which can result in a greater area of the lug being cleaned in a given time.

The battery plate can be a battery plate of a lead acid battery.

The cleaning can comprise removing paste and/or removing a native layer of oxidised lead. In this way, a good bond can be achieved when the battery plate lugs are dipped in molten lead.

Paste can comprise one or more lead oxides. Paste can comprise one or more lead oxides, sulphuric acid and water, for example. Paste can comprise carbon black, lignosulphonate and/or one or more sulphates such as barium sulphate, sodium sulphate or the like. The composition of paste used for the positive plate can be different to the composition of paste used for the negative plate.

The lug can comprise lead. A native layer of oxidised lead can be caused by exposure of the surface of the lug to air.

The laser light can be moved across the surfaces of the first and second sides of the lug.

The one or more laser sources, and/or the heads thereof, can be configured to move thereby causing the laser light to move across the surfaces of the first and second sides of the lug. In this way, laser light can be caused to be transmitted in different directions such that a lug of a battery plate can be cleaned across a range of positions and/or orientations of the battery plate. In other words, a battery plate does not need to be in a specific position and/or orientation to be cleaned, by virtue of using moveable laser sources and/or moveable heads thereof.

The laser light can be moved across the surfaces of the first and second sides of the lug by moving the lug through the laser light. In other words, the battery plate lug can be moved past the laser light thereby causing the laser light to move across the surfaces of the first and second sides of the lug. In this way, the laser light can be applied to the lugs as the lugs are in motion. In this way, the battery plate lug can be cleaned as it moves between steps of a battery plate assembly process, such as between the steps of enveloping the battery plate and stacking the battery plate. This can result in even more efficient processing of battery plates in a battery plate assembly process. Also, it means that the laser cleaning can be readily integrated into conventional manufacturing processes, taking advantage of the inherent movement of the lugs during processing.

The laser light can be moved across the surfaces of the first and second sides of the lug by a combination of movement of the laser sources, and/or the heads thereof, and by moving the lug through the laser light.

The method can further comprise: providing a second battery plate comprising a second lug having a first side and a second side; and using the laser sources to apply laser light to the second lug in order to clean the first and second sides of the second lug.

The battery plate and the second battery plate can comprise positive and negative plates, respectively (or vice versa). In this way, pairs of positive and negative battery plates can be processed in a battery plate assembly process, which can lead to the battery plate assembly process being more efficient. In this way, the positive and negative plates can be stacked in an alternating manner after the battery plates have been cleaned. The present invention can enable the lugs of pairs of battery plates to be cleaned simultaneously or nearly simultaneously in a very efficient way.

A first laser source can be used to apply laser light to the first side of the lug and a second laser source can be used to apply laser light to the second side of the lug. In this way, both sides of the lug can be cleaned simultaneously, resulting in more efficient cleaning.

At least a third laser source can be used to apply laser light to the second lug.

The method can further comprise: using a third laser source to apply laser light to the first side of the second lug; and using a fourth laser source to apply laser light to the second side of the second lug. In this way, both sides of a lug of a second battery plate can be cleaned simultaneously, resulting in more efficient cleaning.

The laser light can be applied to the battery plate lug for less than 200 milliseconds, preferably less than 150 milliseconds. In this way, battery plates can be cleaned efficiently (e.g., quickly) leading to efficient processing of battery plates in a battery plate assembly process.

The laser sources can each have a laser power of up to 300 watts, preferably up to 100 watts, more preferably between 25 to 50 watts. In this way, battery plate lugs can be cleaned efficiently (e.g., quickly). The use of higher laser powers is contemplated as a further possibility.

The wavelength of the laser light can be in the infra-red region, preferably in the range 1000 to 1100 nanometres. In this way, battery plate lugs can be cleaned in an efficient manner.

The laser light can be applied as a spot. In this way, battery plate lugs can be cleaned with high precision.

The laser light can be applied as a line. In this way, battery plate lugs can be cleaned efficiently (e.g., quickly). For example, a line of laser light can extend across a battery plate lug such that the lug can be cleaned by moving the line of laser light across the lug in one dimension.

The laser sources can comprise a continuous wave laser.

The laser sources can comprise a pulsed laser.

The laser light can have a pulse width of between 300 nanoseconds and 500 nanoseconds, preferably between 350 and 450 nanoseconds, more preferably about 400 nanoseconds.

The laser sources can comprise a fibre laser. In this way, the direction in which the laser light is output can be changed easily. In other words, laser light can be generated and delivered by a flexible medium allowing easier delivery to a target.

The laser sources can comprise a solid-state laser.

The solid state laser can be a Nd:YAG or a Nd:YVO4 laser.

The laser sources can comprise a hybrid laser.

The hybrid laser can comprise a fibre lasing medium and a solid state lasing medium. The solid state lasing medium can comprise Nd:YVO4 or Nd:YVO4.

The one or more laser sources, including the first, second, third and fourth laser sources, can each comprise any of the types of lasers described herein and/or can have any of the properties of the lasers described herein. In other words, the one or more lasers can be of the same, or different, type as described herein and/or have the same, or different, properties as described herein.

According to a second aspect of the invention there is provided a method of assembling stacks of battery plates, the method comprising: enveloping a battery plate; cleaning a lug of the battery plate according to a method described herein; and stacking the battery plate.

According to a third aspect of the invention there is provided a system for cleaning a lug of a battery plate in accordance with the first aspect of the invention, the system comprising: one or more laser sources configured to apply laser light to a lug of a battery plate; wherein the laser source is located between a first apparatus configured to envelop the battery plate and a second apparatus configured to stack the battery plate.

For the avoidance of doubt, whenever reference is made herein to 'comprising' or 'including' and like terms, the invention is also understood to include more limiting terms such as 'consisting' and 'consisting essentially' where the context allows it.

Whilst the invention has been described above, it extends to any inventive combination of the features set out above, or in the following description, drawings or claims. For example, any features disclosed in relation to the first aspect of the invention may be combined with any features disclosed in relation to the second aspect of the invention and vice versa as appropriate.

### Description of the Drawings

Specific embodiments of the invention will now be described in detail by way of example only and with reference to the accompanying drawings in which:
Figure 1 is representation of a system for processing battery plates.
Figure 2 shows two images of a battery plate; one before cleaning and one after cleaning according to a process as described herein.

### Detailed Description of the Disclosure

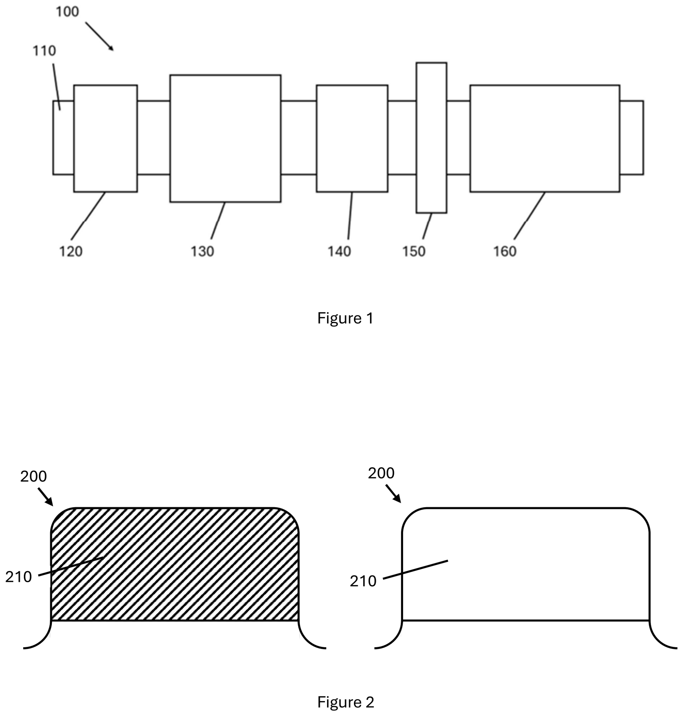

Figure 1 is a representation of a system 100 for processing battery plates which shows how laser cleaning of lugs can be incorporated into the process. A battery plate (not shown) is provided on track 110, which causes the battery plate to move between stations 120-160.

The first station 120 is a first plate feed.

The second station 130 is an envelope head. The envelope head encases individual plates in an envelope or wrapper before the plates are placed in a battery casing. The process of enveloping battery plates is an automated process, carried out in an enveloping machine which takes individual plates one at time from a stack and places each one in an envelope or wrapper. Alternatively, a separator layer can be placed between adjacent plates.

The third station 140 is a second plate feed.

The fourth station 150 is a laser cleaning station. The laser cleaning station includes a hybrid laser (manufactured by Keyence, MD-X series) combining a fibre lasing medium and a solid state lasing medium. The solid state lasing medium comprises Nd:YVO4. The wavelength of emitted light is 1064nm. The output power of the laser is 25W. The laser light is applied as a spot. The laser light is caused to move across the surface of the lug as a raster scan, such as in a grid pattern.

The fifth station 160 is a plate group builder. The plate group builder is used to stack the battery plates. The skilled reader will appreciate that a battery plate manufacturing process typically comprises further steps, which for presentational simplicity are not shown in Figure 1.

Figure 2 shows two images of a battery plate 200 comprising a battery plate lug 210; one before cleaning and one after cleaning according to a process as described herein. The image of the battery plate 200 on the left-hand side is before cleaning, and the image of the battery plate 200 on the right-hand side is after cleaning according to a process as described herein.

Numerous variations are possible. For example, the laser cleaning station could comprise a mechanism to move the lug relative to the laser.

Alternatively, different types and models of lasers might be used. For example, the laser cleaning station could include a pulsed fibre laser (manufactured by HPC Laser) outputting laser light at a wavelength of 1070nm, the laser light having a pulse width of 400 nanoseconds. The output power of the laser light can be 100W or 300W. Alternatively still, the laser cleaning station could include a QFC-100 laser system (manufactured by P-Laser).

The laser light can be applied as a spot or as a line. The laser causes laser light to move across the surface of the lug. Alternatively, the laser cleaning station comprises a mechanism to move the lug relative to the laser.

The laser cleaning station can comprise four laser sources. In such an arrangement, a first laser source applies laser light to a first side of a lug of a first battery plate. A second laser source applies laser light to a second side of the lug of the first battery plate. A third laser source applies laser light to a first side of a lug of a second battery plate. A fourth laser source applies laser light to a second side of the lug of the second battery plate. The first battery plate is a negative battery plate. The second battery plate is a positive battery plate.

While the invention has been described above with reference to one or more preferred embodiments, it will be appreciated that various changes or modifications may be made without departing from the scope of the invention as defined in the appended claims.

A method and system may also be provided as recited in the following numbered statements:
1. A method of cleaning a lug of a battery plate, the method comprising:
   providing a battery plate comprising a lug having a first side and a second side; and
   using one or more laser sources to apply laser light to the lug in order to clean the first and second sides of the lug;
   wherein the step of applying laser light to the lug occurs between the steps of enveloping the battery plate and stacking the battery plate of a battery plate assembly process.
2. A method according to statement 1, wherein the cleaning comprises removing paste and/or removing a native layer of oxidised lead.
3. A method according to statement 1 or statement 2, wherein the laser light is moved across the surfaces of the first and second sides of the lug.
4. A method according to statement 3, wherein the laser light is moved across the surfaces of the first and second sides of the lug by moving the lug through the laser light.
5. A method according to any preceding numbered statement, wherein the method further comprises:
   providing a second battery plate comprising a second lug having a first side and a second side; and
   using the laser sources to apply laser light to the second lug in order to clean the first and second sides of the second lug.
6. A method according to any preceding numbered statement, wherein a first laser source is used to apply laser light to the first side of the lug and a second laser source is used
7. A method according to statement 5 or statement 6, wherein at least a third laser source is used to apply laser light to the second lug.
8. A method according to any of statement 5 to 7, wherein the method further comprises:
   using a third laser source to apply laser light to the first side of the second lug; and
   using a fourth laser source to apply laser light to the second side of the second lug.
9. A method according to any preceding numbered statement, wherein the laser light is applied to the battery plate lug for less than 200 milliseconds, preferably less than 150 milliseconds.
10. A method according to any preceding numbered statement, wherein the laser sources each have a laser power of up to 300 watts, preferably up to 100 watts, more preferably between 25 to 50 watts.
11. A method according to any preceding numbered statement, wherein the wavelength of the laser light is in the infra-red region, preferably in the range 1000 to 1100 nanometres.
12. A method according to any preceding numbered statement, wherein the laser light is applied as a spot.
13. A method according to any of statement 1 to 11, wherein the laser light is applied as a line.
14. A method according to any preceding numbered statement, wherein the laser sources comprise a continuous wave laser.
15. A method according to any of statement 1 to 13, wherein the laser sources comprise a pulsed laser.
16. A method according to statement 15, wherein the laser light has a pulse width of between 300 nanoseconds and 500 nanoseconds, preferably between 350 and 450 nanoseconds, more preferably about 400 nanoseconds.
17. A method according to any preceding numbered statement, wherein the laser sources comprise a fibre laser.
18. A method according to any of statement 1 to 16, wherein the laser sources comprise a solid-state laser.
19. A method according to statement 18, wherein the solid state laser is a Nd:YAG or a Nd:YVO4 laser.
20. A method according to any of statement 1 to 16, wherein the laser sources comprise a hybrid laser.
21. A method according to statement 20, wherein the hybrid laser comprises a fibre lasing medium and a solid state lasing medium.
22. A method of assembling stacks of battery plates, the method comprising:
   enveloping a battery plate;
   cleaning a lug of the battery plate according to statement 1; and
   stacking the battery plate.
23. A system for cleaning a lug of a battery plate in a method according to statement 1, the system comprising:
   one or more laser sources configured to apply laser light to a lug of a battery plate;
   wherein the laser source is located between a first apparatus configured to envelop the battery plate and a second apparatus configured to stack the battery plate.

## Claims

1. A method of cleaning a lug of a battery plate, the method comprising:
providing a battery plate comprising a lug having a first side and a second side; and
using one or more laser sources to apply laser light to the lug in order to clean the first and second sides of the lug;
wherein the step of applying laser light to the lug occurs between the steps of enveloping the battery plate and stacking the battery plate of a battery plate assembly process.

2. A method according to claim 1, wherein the cleaning comprises removing paste and/or removing a native layer of oxidised lead, and/or wherein the laser light is moved across the surfaces of the first and second sides of the lug. and/or wherein the laser light is moved across the surfaces of the first and second sides of the lug by moving the lug through the laser light.

3. A method according to any preceding claim, wherein the method further comprises:
providing a second battery plate comprising a second lug having a first side and a second side; and
using the laser sources to apply laser light to the second lug in order to clean the first and second sides of the second lug, or wherein a first laser source is used to apply laser light to the first side of the lug and a second laser source is used to apply laser light to the second side of the lug.

4. A method according to claim 3, wherein at least a third laser source is used to apply laser light to the second lug. and/or wherein the method further comprises:
using a third laser source to apply laser light to the first side of the second lug; and
using a fourth laser source to apply laser light to the second side of the second lug.

5. A method according to any preceding claim, wherein the laser light is applied to the battery plate lug for less than 200 milliseconds, preferably less than 150 milliseconds.

6. A method according to any preceding claim, wherein the laser sources each have a laser power of up to 300 watts, preferably up to 100 watts, more preferably between 25 to 50 watts.

7. A method according to any preceding claim, wherein the wavelength of the laser light is in the infra-red region, preferably in the range 1000 to 1100 nanometres.

8. A method according to any preceding claim, wherein the laser light is applied as a spot, or wherein the laser light is applied as a line.

9. A method according to any preceding claim, wherein the laser sources comprise a continuous wave laser, or wherein the laser sources comprise a pulsed laser.

10. A method according to claim 9, wherein the laser light has a pulse width of between 300 nanoseconds and 500 nanoseconds, preferably between 350 and 450 nanoseconds, more preferably about 400 nanoseconds.

11. A method according to any preceding claim, wherein the laser sources comprise a fibre laser, or wherein the laser sources comprise a solid-state laser.

12. A method according to claim 11, wherein the solid state laser is a Nd:YAG or a Nd:YVO₄ laser.

13. A method according to any of claims 1 to 10, wherein the laser sources comprise a hybrid laser, and/or wherein the hybrid laser comprises a fibre lasing medium and a solid state lasing medium.

14. A method of assembling stacks of battery plates, the method comprising:
enveloping a battery plate;
cleaning a lug of the battery plate according to claim 1; and
stacking the battery plate.

15. A system for cleaning a lug of a battery plate in a method according to claim 1, the system comprising:
one or more laser sources configured to apply laser light to a lug of a battery plate;
wherein the laser source is located between a first apparatus configured to envelop the battery plate and a second apparatus configured to stack the battery plate.
